# EUROPÄISCHE PATENTANMELDUNG

(11) **EP 2 308 733 A2**
(43) Veröffentlichungstag der Anmeldung: **13.04.2011**
(21) Anmeldenummer: 10181543.9
(22) Anmeldetag: 29.09.2010
(51) Int. Cl.: B60W 20/00, B60W 30/02, B60K 6/52, B60W 10/00

(54) **Verfahren zur Einstellung des Antriebsmoments in einem Fahrzeug mit zwei Antriebsmotoren**

(30) Priorität: 07.10.2009 DE 102009045418
(71) Anmelder: Robert Bosch GmbH, 70442 Stuttgart (DE)
(72) Erfinder: Schlemmer, Martin, 74232, Abstatt (DE)

(57) **Zusammenfassung**

Bei einem Verfahren zur Einstellung des Antriebsmoments in einem Fahrzeug, das mindestens zwei Antriebsmotoren aufweist, wird für den Fall, dass das an einer ersten Fahrzeugachse wirkende Moment aktuell durch einen selbsttätigen Eingriff über ein Fahrerassistenzsystem geändert wird, ein Soll-Antriebsmoment erhöht oder verringert, das einem Fahrerassistenzsystem als Eingangsgröße zugeführt wird.

## Beschreibung

Die Erfindung bezieht sich auf ein Verfahren zur Einstellung des Antriebsmomentes in einem Fahrzeug, das mit mindestens zwei Antriebsmotoren ausgestattet ist, nach dem Oberbegriff des Anspruches 1 bzw. 4.

### Stand der Technik

In der WO 2007/144526 A1 wird ein Hybridfahrzeug beschrieben, das als Antriebsquelle eine Brennkraftmaschine zum Antrieb der Vorderachse und einen Elektromotor zum Antrieb der Hinterachse aufweist. Das Zusammenspiel von Brennkraftmaschine und Elektromotor ist gemäß dieser Druckschrift in der Weise geregelt, dass das Antriebsmoment des auf die Hinterachse wirkenden Elektromotors begrenzt wird, sobald festgestellt wird, dass die Längskraft an der Vorderachse innerhalb eines definierten Wertebereichs liegt und außerdem die Längskraft an der Hinterachse kleiner oder gleich null ist. Das Fahrzeug ist zur Ermittlung der aktuellen Zustandsgrößen, aus denen sich die Kräfte berechnen, und zur Einstellung der Brennkraftmaschine bzw. des Elektromotors mit einer fahrzeugeigenen Sensorik sowie mit einem Regel- bzw. Steuergerät ausgestattet.

Hintergrund des in der WO 2007/144526 A1 ist die Rekuperation zur Gewinnung elektrischer Energie, mit der die dem Elektromotor zugeordnete Batterie wieder aufgeladen wird. Bei Fahrzeugen, die mit mindestens zwei Antriebsmotoren versehen sind, ist aber auch der fahrdynamische Einfluss zu beachten, der sich durch das gleichzeitige Zusammenwirken beider Antriebsmotoren ergibt.

### Offenbarung der Erfindung

Der Erfindung liegt die Aufgabe zu Grunde, das fahrdynamische Verhalten von Fahrzeugen, die mit mindestens zwei Antriebsmotoren ausgestattet sind, zu verbessern.

Diese Aufgabe wird erfindungsgemäß mit den Merkmalen des Anspruches 1 bzw. 4 gelöst. Die Unteransprüche geben zweckmäßige Weiterbildungen an.

Die erfindungsgemäßen Verfahren beziehen sich auf allradgetriebene Fahrzeuge, die zumindest zwei Antriebsmotoren aufweisen, deren Antriebsmoment auf zwei unterschiedliche Fahrzeugräder, insbesondere unterschiedliche Fahrzeugachsen geleitet werden kann. Die Aufteilung erfolgt in der Weise, dass das Antriebsmoment des ersten Antriebsmotors auf eine erste Fahrzeugachse und das Antriebsmoment des zweiten Antriebsmotors auf die zweite Fahrzeugachse geleitet wird. Hierbei kommen sowohl Ausführungen mit permanentem Allradantrieb als auch Ausführungen mit permanentem Antrieb einer Achse und zuschaltbarem Antrieb der zweiten Fahrzeugachse in Betracht. Des Weiteren sollen von den erfindungsgemäßen Verfahren sowohl Ausführungen umfasst sein, bei denen ein Antriebsmotor die zugeordnete Fahrzeugachse mit beiden Rädern im linken und rechten Fahrzeugseitenbereich antreibt, als auch Ausführungen, bei denen in einer Fahrzeugachse pro Rad jeweils ein Antriebsmotor vorgesehen ist, beispielsweise ein elektrischer Radnabenmotor, und darüber hinaus der zweiten Fahrzeugachse ein weiterer Antriebsmotor zugeordnet ist.

Als Antriebsmotoren können sowohl gleichartige als auch unterschiedliche Motoren verwendet werden. In Betracht kommt insbesondere eine Hybridausführung mit einem Verbrennungsmotor und mindestens einem Elektromotor als auch Ausführungen, die ausschließlich Verbrennungsmotoren oder ausschließlich Elektromotoren als Antriebsquelle vorsehen.

Des Weiteren wird hardwareseitig eine Fahrzeugsensorik vorausgesetzt, über die Fahrzeugzustandsgrößen gemessen werden können, wobei entweder unmittelbar aus den Messgrößen oder unter Verwendung der Messgrößen eine die Fahrstabilität beeinflussende Fahrzeugzustandsgröße auf Über- oder Unterschreitung eines zulässigen Wertebereichs untersucht wird. Sofern dies der Fall ist, muss entweder von einer tatsächlich bereits existierenden oder eine drohenden Fahrzeuginstabilität bzw. einer die Fahrzeugstabilität beeinträchtigenden Situation ausgegangen werden. Die Messgrößen werden in einem Regel- bzw. Steuergerät verarbeitet, in welchem auch Stellsignale zur Einstellung mindestens eines Antriebsmotors erzeugt werden. Als fahrzeugeigene Sensorik wird beispielsweise eine zum elektronischen Stabilitätsprogramm ESP gehörende Sensorik eingesetzt, die üblicherweise Raddrehzahlfühler für jedes Rad, einen Querbeschleunigungssensor und einen Gierratensensor umfasst.

Des Weiteren setzen die erfindungsgemäßen Verfahren mindestens ein Fahrerassistenzsystem im Fahrzeug voraus, über das das Moment an den Fahrzeugachsen bzw. den angetriebenen Rädern selbsttätig beeinflusst werden kann. Die Momentenänderung kann sowohl über eine Manipulation eines oder beider Antriebsmotoren erfolgen als auch über einen Bremseneingriff. Hierbei sind sowohl Ausführungen möglich, bei denen nur das Moment an der einen oder der anderen Fahrzeugachse als auch Ausführungen, bei denen das Moment an beiden Fahrzeugachsen bzw. allen Fahrzeugrädern oder auch innerhalb einer Fahrzeugachse nur an einem Fahrzeugrad manipuliert wird.

Als Fahrerassistenzsystem kommen alle Systeme in Betracht, über die das Moment an einer Achse bzw. einem Rad einer Achse in selbsttätiger Weise verändert werden kann, also beispielsweise Antriebs-Schlupf-Regelsysteme (ASR) zur Veränderung von Antriebs- und/oder Bremsmomenten oder elektronische Stabilitätsprogramme (ESP).

Gemäß eines ersten Aspektes der Erfindung wird für den Fall, dass das an einer ersten Fahrzeugachse wirkende Element aktuell durch einen selbsttätigen Eingriff über ein Fahrerassistenzsystem geändert wird, ein Soll-Antriebsmoment erhöht oder verringert und einem Fahrerassistenzsystem als Eingangsgröße zur selbsttätigen Einstellung des Antriebsmoments in dem der ersten oder zweiten Fahrzeugachse zugeordneten Antriebsmotor zugeführt. Die Veränderung des Soll-Antriebsmoments für das Fahrerassistenzsystem kann als Vorstufe für das Inkrafttreten des Fahrerassistenzsystems für diejenige Fahrzeugachse betrachtet werden, an der das Fahrerassistenzsystem aktuell noch nicht aktiv ist, jedoch auf Grund der momentan betrachteten Fahrzeugzustandsgröße bzw. Fahrzeugkenngröße davon auszugehen ist, dass das Fahrerassistenzsystem auch an dieser Fahrzeugachse in Kürze aktiv werden wird. Über die Anpassung des Sollantriebsmoments wird noch vor dem Aktivwerden des Fahrzeugassistenzsystems ein verbesserter Sollwert ermittelt und vorgegeben, der somit bereits zu Beginn der Aktivierung des Fahrerassistenzsystems an dieser Achse bekannt ist. Über das verbesserte Soll-Antriebsmoment für den Antriebsmotor an der noch nicht von einem Fahrerassistenzsystem beaufschlagten Fahrzeugachse wird ein verbessertes Zusammenspiel zwischen den beiden separaten Antriebsmotoren erreicht.

Die Antriebsmoment-Sollvorgabe kann sich sowohl auf denjenigen Antriebsmotor beziehen, der aktuell bereits von dem Fahrerassistenzsystem beaufschlagt wird, als auch auf den zweiten Antriebsmotor, dessen Antriebsmoment noch nicht von dem Fahrerassistenzsystem geregelt wird. Möglich ist sowohl die Vorgabe des Sollmoments für nur einen der beiden Antriebsmotoren als auch für beide Antriebsmotoren. Die Sollmomentvorgabe für den bereits vom Fahrerassistenzsystem geregelten Antriebsmotor bedeutet eine Sollwertanpassung im laufenden Betrieb des Fahrerassistenzsystems, wohingegen die Sollwertvorgabe für den noch nicht vom Fahrerassistenzsystem beaufschlagten Antriebsmotor als Vorstufe betrachtet werden kann.

Das erfindungsgemäße Verfahren kann auf unterschiedliche Fahrzeugkonfigurationen sowie Fahrsituationen angewandt werden. Befindet sich beispielsweise nur die Vorderachse des Fahrzeugs in einer Regelung des Fahrerassistenzsystems, nicht jedoch die Hinterachse, und wird zugleich über das Fahrerassistenzsystem eine ansteigende Übersteuertendenz des Fahrzeugs festgestellt, wird über die erfindungsgemäße Funktion durch Vorgabe eines entsprechenden Sollwerts das Antriebsmoment an der Hinterachse begrenzt, um eine Übersteuerungsverstärkung durch Erhöhen des Antriebsmomentes an der Hinterachse zu vermeiden.

In einer weiteren Ausführungsvariante wird an der Hinterachse das Moment über eine Regelung des Fahrerassistenzsystems eingestellt, nicht jedoch an der Vorderachse. Falls am Fahrerassistenzsystem eine zunehmende Untersteuertendenz des Fahrzeugs festgestellt wird, wird das Antriebsmoment an der Vorderachse durch entsprechende Vorgabe eines Soll-Antriebsmoments begrenzt, um zu verhindern, dass bei einem Eingreifen des Fahrerassistenzsystems an der Vorderachse das Antriebsmoment erhöht und dadurch die Untersteuerungstendenz verstärkt wird.

Gemäß einer weiteren Ausführung befindet sich die Hinterachse in einer Momentenregelung, nicht jedoch die Vorderachse, wobei im Fahrerassistenzsystem eine ansteigende Untersteuertendenz des Fahrzeugs festgestellt wird. Erfindungsgemäß kann das Antriebsmoment an der Hinterachse durch entsprechende Vorgabe eines Sollmoments erhöht werden, um eine Reduktion der Seitenführungskräfte an der Hinterachse und somit ein Übersteuern bzw. eine Reduzierung des Untersteuerns zu verhindern.

Gemäß einer weiteren Ausführungsvariante wird das Moment an einer der Fahrzeugachsen über ein Fahrerassistenzsystem auf Grund eines zu hohen Antriebsschlupfes an beiden Rädern dieser Achse geregelt, wohingegen an der anderen Fahrzeugachse beide Räder stabil laufen. Unter der Annahme, dass sich das gesamte Fahrzeug und somit beide Fahrzeugachsen auf dem gleichen oder zumindest ähnlichem Untergrund befinden, wird über das erfindungsgemäße Verfahren das Antriebsmoment an der nicht-geregelten Achse auf einen Sollwert begrenzt, um zu verhindern, dass die Räder dieser Achse einen unzulässig hohen Längsschlupf entwickeln.

In einer weiteren Ausführung, die ein Fahrzeug in Kurvenfahrt betrifft, wird diejenige Fahrzeugachse momentengeregelt, an der das kurvenäußere Rad einen zu hohen Antriebsschlupf aufweist, wohingegen an der anderen Achse beide Räder stabil laufen. Unter der Annahme, dass sich das gesamte Fahrzeug und damit auch beide Antriebsachsen auf dem gleichen oder zumindest ähnlichen Untergrund und damit in einem Grenzbereich befinden, wird durch das erfindungsgemäße Verfahren das Antriebsmoment an der nicht-momentengeregelten Achse auf einen gegebenen Sollwert begrenzt, um zu verhindern, dass die Räder dieser Achse einen unzulässig hohen Schlupf entwickeln.

Gemäß eines weiteren Aspektes der Erfindung wird noch vor der Aktivierung eines Fahrerassistenzsystems zur selbsttätigen Änderung des Moments an der ersten oder der zweiten Fahrzeugachse das Soll-Antriebsmoment angepasst und dem Fahrerassistenzsystem als Eingangsgröße zur Verfügung gestellt. Die Generierung des angepassten Soll-Antriebsmoments erfolgt somit, bevor eines der Fahrerassistenzsysteme im Fahrzeug aktiviert wird, über die die Fahrdynamik beeinflussbar ist. Da bereits über die betrachtete Fahrzeugzustands- bzw. Fahrzeugkenngröße festgestellt wurde, dass eine Tendenz in Richtung einer Fahrinstabilität vorliegt, kann über die Anpassung des Sollantriebsmoments bereits in einem frühen Stadium im Sinne einer Vorstufe ein verbesserter Sollwert für das Antriebsmoment zur Verfügung gestellt werden. Das Soll-Antriebsmoment kann entweder nur für einen der beiden Antriebsmotoren oder für beide Antriebsmotoren bzw. sämtliche im Fahrzeug befindliche Antriebsmotoren zur Verfügung gestellt werden, wobei insbesondere für jeden Antriebsmotor ein individuelles Soll-Antriebsmoment erzeugt wird. Mit der Aktivierung eines Fahrerassistenzsystems entweder für einen der Antriebsmotoren oder für mehrere Antriebsmotoren stehen verbesserte und auf die aktuelle Fahrsituation angepasste Sollwerte zur Verfügung.

Gemäß einer weiteren Ausführungsvariante erkennt das Fahrerassistenzsystem eine Untersteuertendenz des Fahrzeugs, woraufhin über das erfindungsgemäße Verfahren das Antriebsmoment an der Vorderachse begrenzt und/oder das Antriebsmoment an der Hinterachse durch Vorgabe entsprechender Sollmomente angehoben wird, um dem Untersteuern entgegenzuwirken. Beide Achsen befinden sich noch nicht in einer Momentenregelung, die Vorgabe der Soll-Antriebsmomente stellt eine Vorstufe zu der Aktivierung der Fahrerassistenzsysteme dar.

Gemäß einer weiteren Ausführungsvariante erkennt das Fahrerassistenzsystem eine Übersteuertendenz des Fahrzeugs, woraufhin das Antriebsmoment an der Hinterachse begrenzt und/oder das Antriebsmoment an der Vorderachse durch Vorgabe entsprechender Sollwerte angehoben wird, um einem Übersteuern des Fahrzeugs entgegenzuwirken. Auch in dieser Situation erfolgt die Vorgabe der Soll-Antriebsmomente als Vorstufe vor der Aktivierung des Fahrerassistenzsystems an einer der Achsen oder an beiden Achsen.

Über die betrachtete Fahrzeugzustands- bzw. Kenngröße eine Untersteuerungs-oder Übersteuerungstendenz des Fahrzeugs festzustellen, stellt eine zweckmäßige Ausführung dar. Grundsätzlich sind zusätzlich oder alternativ zum Unter- bzw. Übersteuern des Fahrzeugs weitere Fahrsituationen möglich, in denen die erfindungsgemäßen Verfahren zur Vorgabe der Soll-Antriebsmomente durchgeführt werden, wobei prinzipiell alle längs- oder querdynamischen Fahrinstabilitäten in Betracht kommen.

Zur Feststellung, ob das Fahrzeug eine Unter- oder Übersteuertendenz aufweist, wird zweckmäßigerweise aus gemessenen oder geschätzten Fahrzeugzustandsgrößen der aktuelle Schwimmwinkel bestimmt, der den Winkel zwischen der Fahrzeuggeschwindigkeit im Schwerpunkt und der Fahrzeuglängsachse bezeichnet. Bei Kenntnis des Schwimmwinkels kann auf eine Unter- bzw. Übersteuertendenz geschlossen werden. Grundsätzlich möglich ist dies auch über einen Vergleich zwischen den Schräglaufwinkeln an den Vorderrädern und den Hinterrädern des Fahrzeugs.

Weitere Vorteile und zweckmäßige Ausführungen sind den weiteren Ansprüchen, der Figurenbeschreibung und den Zeichnungen zu entnehmen. Es zeigen:
- Fig. 1: in schematischer Blockdarstellung das Zusammenwirken von zwei Antriebsmotoren in einem Fahrzeug, die jeweils einer Fahrzeugachse zugeordnet sind,
- Fig. 2: ein Ablaufdiagramm mit einzelnen Verfahrensschritten zur Durchführung des Verfahrens.

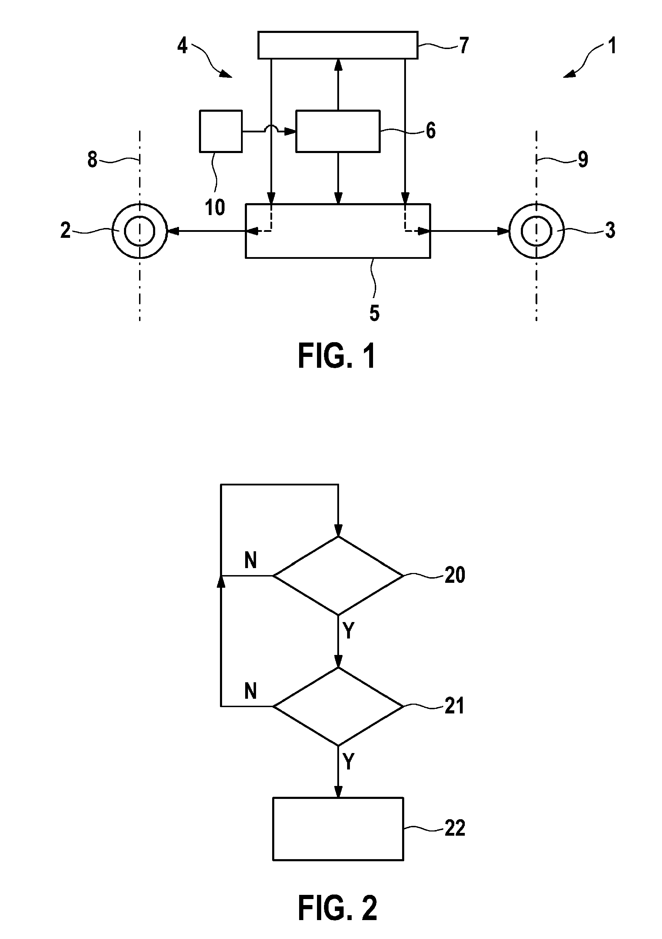

Das in Fig. 1 in stark schematisierter Darstellung gezeigte Fahrzeug 1 weist zwei voneinander separat ausgebildete Antriebsmotoren 2 und 3 auf, von denen der erste Antriebsmotor 2 als Vorderachs-Antriebsmotor zum Antreiben der Räder an der Vorderachse 8 und der zweite Antriebsmotor 3 als Hinterachs-Antriebsmotor zum Antreiben der Räder an der Hinterachse 9 ausgeführt sind. Die beiden Antriebsmotoren 2 und 3 können sich in ihrer Art unterscheiden, beispielsweise ist einer der Antriebsmotoren als Brennkraftmaschine und der andere Antriebsmotor als Elektromotor ausgeführt, so dass ein Hybridantrieb zum Antreiben beider Fahrzeugachsen im Fahrzeug gegeben ist. Es kommen sowohl Ausführungen in Betracht, bei denen die Brennkraftmaschine die Vorderachsräder und der Elektromotor die Hinterachsräder beaufschlagt als auch umgekehrt. Des Weiteren ist es möglich, anstelle eines einzelnen Elektromotors, der beide Räder der betreffenden Achse antreibt, zwei separate Elektromotoren als an dieser Achse vorzusehen, die beispielsweise als Radnabenmotoren ausgeführt sind. Schließlich ist es auch denkbar, an beiden Achsen ausschließlich Elektromotoren oder ausschließlich Verbrennungsmotoren zu verwenden.

Dem Fahrzeug 1 ist ein Regel- bzw. Steuergerät 4 zugeordnet, welches eine Antriebssteuerungseinheit 5, ein elektronisches Stabilitätsprogramm (ESP) 6 und eine Vorsteuerungseinheit 7 umfasst. Dem elektronischen Stabilitätsprogramm 6 ist eine Sensorik 10 zugeordnet, über die verschiedene Fahrzeugzustandsgrößen gemessen werden können, insbesondere die Umdrehungsgeschwindigkeit jedes Fahrzeugrades, die Querbeschleunigung und die Gierrate des Fahrzeugs.

Die beiden Antriebsmotoren 2 und 3 werden über Signale der Antriebssteuerungseinheit 5 eingestellt. Über die Antriebssteuerungseinheit 5 können bei Aktivierung eines Fahrerassistenzsystems wie beispielsweise ESP Soll-Antriebsmomente für beide Motoren oder für einen der beiden Motoren vorgegeben und das von dem betreffenden Motor abgegebene Ist-Moment auf den jeweiligen Sollwert eingeregelt werden.

Über das elektronische Stabilitätsprogramm 6 können in fahrdynamisch kritischen Situationen selbsttätig Eingriffe sowohl in die Generierung des abgegebenen Motormoments jedes Antriebsmotors als auch in das Bremssystem zur Abbremsung beliebiger Räder des Fahrzeugs durchgeführt werden.

Erfindungsgemäß wird in der Vorsteuerungseinheit 7 das Soll-Antriebsmoment für einen der beiden Antriebsmotoren 2, 3 bzw. für beide Antriebsmotoren situationsabhängig festgelegt. Das Soll-Antriebsmoment bzw. die Soll-Antriebsmomente werden der Antriebssteuerungseinheit 5 als Sollwert zugeführt, auf die das tatsächlich angegebene Antriebsmoment des betreffenden Antriebsmotors eingeregelt wird.

Wie dem Ablaufdiagramm gemäß Fig. 2 zu entnehmen, wird in einem ersten Verfahrensschritt 20 zunächst überprüft, ob das elektronische Stabilitätsprogramm ESP an einer der beiden Fahrzeugachsen aktiviert ist, wobei die Aktivierung sowohl als Bremseingriff als auch in Form eines Eingriffs in das abgegebene Motormoment jedes Motors vorliegen kann. Sofern ein ESP-Eingriff an einer der Achsen vorliegt und die jeweils andere Achse zugleich unbeaufschlagt vom ESP ist, wird der ja-Verzweigung ("Y") folgend zum nächsten Verfahrensschritt 21 fortgefahren; andernfalls liegen die Bedingungen für die Durchführung des Verfahrens gemäß eines ersten Aspektes der Erfindung nicht vor und es wird der nein-Verzweigung ("N") folgend wieder zum Beginn des Verfahrens zurückgekehrt, das in zyklischen Abständen erneut durchlaufen wird.

Im Block 21 erfolgt als weitere Abfrage die Überprüfung, ob das Fahrzeug eine Untersteuerungstendenz oder Übersteuerungstendenz aufweist. Hierzu wird beispielsweise der Schwimmwinkel des Fahrzeugs auf Unter- bzw. Überschreitung eines zugeordneten Grenzwertes abgeprüft, wobei der Schwimmwinkel auf der Grundlage sensorisch ermittelter Daten, die über die ESP-Sensorik gemessen werden, berechnet bzw. geschätzt wird. Ergibt die Abfrage gemäß Verfahrensschritt 21, dass der Schwimmwinkel außerhalb des zulässigen Wertebereichs liegt, so besteht die Gefahr eines Unter- bzw. Übersteuerns und es wird der ja-Verzweigung folgend zum nächsten Verfahrensschritt 22 fortgefahren. Andernfalls befindet sich der Schwimmwinkel in einem zulässigen Wertebereich, so dass keine aktuelle Unter- oder Übersteuerungstendenz vorliegt; in diesem Fall wird der nein-Verzweigung folgend wieder zum Beginn des Verfahrens zu Verfahrensschritt 20 zurückgekehrt.

In Verfahrensschritt 22 wird je nach aktueller Fahrsituation eine Obergrenze oder eine Untergrenze für das Soll-Antriebsmoment für einen der beiden oder für beide Antriebsmotoren festgelegt. Das Soll-Antriebsmoment ersetzt in dem bereits aktivierten elektronischen Stabilitätsprogramm den bis dahin geltenden Wert für das Soll-Antriebsmoment und dient für den Antriebsmotor, der noch nicht vom elektronischen Stabilitätsprogramm beeinflusst wird, als Vorsteuerung, so dass mit der Aktivierung des elektronischen Stabilitätsprogramms und der Einregelung des Antriebsmoments des betreffenden Motors ein Sollwert zur Verfügung steht, der zum einen auf die bestehende Situation angepasst ist und zum andern dem Zusammenwirken beider Antriebsmotoren Rechnung trägt.

In einer weiteren erfindungsgemäßen Ausführung wird das Verfahren für den Fall eingesetzt, dass das elektronische Stabilitätsprogramm bereits an beiden Achsen des Fahrzeugs aktiv ist und beide Antriebsmotoren mit einem Sollmoment beaufschlagt. Ist diese Voraussetzung erfüllt, die im Verfahrensschritt 20 überprüft wird, wird der ja-Verzweigung folgend zum nächsten Verfahrensschritt 21 fortgefahren; anderenfalls erfolgt die Rückkehr zum Beginn des Verfahrensschrittes 20. Im Verfahrensschritt 21 erfolgt wie beim vorhergehenden Ausführungsbeispiel die Abfrage, ob das Fahrzeug eine Übersteuerungs- oder Untersteuerungstendenz aufweist, was anhand des Schwimmwinkels des Fahrzeugs überprüft wird, der auf der Grundlage sensorisch ermittelter Daten berechnet bzw. geschätzt wird. Sofern eine Übersteuerungs- oder Untersteuerungstendenz vorliegt, wird der ja-Verzweigung folgend zum nächsten Verfahrensschritt 22 fortgefahren, anderenfalls zum Beginn des Verfahrens zurückgekehrt.

Im Verfahrensschritt 22 wird schließlich in einer Vorsteuerungsstufe das Soll-Antriebsmoment für mindestens einen Motor einer Achse, zweckmäßigerweise aber für beide Motoren festgelegt.

Grundsätzlich können anstelle eines elektronischen Stabilitätsprogramms auch sonstige Fahrerassistenzsysteme eingesetzt werden, beispielsweise ein Antriebs-Schlupf Regelsystem (ASR).

## Patentansprüche

1. Verfahren zur Einstellung des Antriebsmoments in einem Fahrzeug, das mindestens zwei Antriebsmotoren (2, 3) aufweist, deren Antriebsmoment auf unterschiedliche Fahrzeugräder, insbesondere unterschiedliche Fahrzeugachsen (8, 9) verteilbar ist, wobei über eine Fahrzeugsensorik (10) eine die Fahrstabilität beeinflussende Fahrzeugzustandsgröße bzw. Fahrzeugkenngröße ermittelt und ein auf mindestens eine Fahrzeugachse (8, 9) wirkendes Moment verändert wird, falls die betrachtete Fahrzeugzustands- bzw. - kenngröße außerhalb eines zulässigen Wertebereichs liegt, **dadurch gekennzeichnet, dass** für den Fall, dass das an einer ersten Fahrzeugachse (8, 9) wirkende Moment aktuell durch einen selbsttätigen Eingriff über ein Fahrerassistenzsystem geändert wird, ein Soll-Antriebsmoment erhöht oder verringert wird, das einem Fahrerassistenzsystem als Eingangsgröße zur selbsttätigen Einstellung des Antriebsmoments in dem der ersten oder zweiten Fahrzeugachse (8, 9) zugeordneten Antriebsmotor (2, 3) zugeführt wird.

2. Verfahren nach Anspruch 1, **dadurch gekennzeichnet, dass** das Soll-Antriebsmoment für den Antriebsmotor (2, 3) verändert wird, der der Fahrzeugachse (8, 9) zugeordnet ist, deren Moment aktuell durch den selbsttätigen Eingriff über ein Fahrerassistenzsystem geändert wird.

3. Verfahren nach Anspruch 1 oder 2, **dadurch gekennzeichnet, dass** das Soll-Antriebsmoment für den Antriebsmotor (2, 3) verändert wird, der der Fahrzeugachse (8, 9) zugeordnet ist, die aktuell nicht mit einem Moment durch den selbsttätigen Eingriff über ein Fahrerassistenzsystem beaufschlagt wird.

4. Verfahren zur Einstellung des Antriebsmoments in einem Fahrzeug, insbesondere nach einem der Ansprüche 1 bis 3, wobei das Fahrzeug (1) mindestens zwei Antriebsmotoren (2, 3) aufweist, deren Antriebsmoment auf unterschiedliche Fahrzeugräder, insbesondere unterschiedliche Fahrzeugachsen (8, 9) verteilbar ist, wobei über eine Fahrzeugsensorik (10) eine die Fahrstabilität beeinflussende Fahrzeugzustandsgröße bzw. Fahrzeugkenngröße ermittelt und ein auf mindestens eine Fahrzeugachse (8, 9) wirkendes Moment verändert wird, falls die betrachtete Fahrzeugzustandsgröße bzw. Fahrzeugkenngröße außerhalb eines zulässigen Wertebereichs liegt, **dadurch gekennzeichnet, dass** vor der selbsttätigen Änderung des Moments an der ersten oder der zweiten Fahrzeugachse (8, 9) über ein Fahrerassistenzsystem zunächst ein Soll-Antriebsmoment erhöht oder verringert wird, das einem Fahrerassistenzsystem als Eingangsgröße zur selbsttätigen Einstellung des Antriebsmoments in mindestens einem Antriebsmotor (2, 3) zugeführt wird.

5. Verfahren nach einem der Ansprüche 1 bis 4, **dadurch gekennzeichnet, dass** die Vorgabe des Soll-Antriebsmoments durchgeführt wird, wenn über die betrachtete Fahrzeugzustands- bzw. -kenngröße eine Untersteuerungs- oder Übersteuerungstendenz des Fahrzeugs (1) festgestellt wird.

6. Verfahren nach einem der Ansprüche 1 bis 5, **dadurch gekennzeichnet, dass** der Eingriff des Fahrerassistenzsystems als Bremseingriff durchgeführt wird und durch selbsttätige Ansteuerung mindestens einer Radbremse ein Bremsmoment an einer Fahrzeugachse (8, 9) erzeugt wird.

7. Verfahren nach einem der Ansprüche 1 bis 6, **dadurch gekennzeichnet, dass** das Fahrerassistenzsystem in das Motormanagement eines Antriebsmotors (2, 3) zur selbsttätigen Änderung des Antriebsmoments eingreift.

8. Regel- bzw. Steuergerät zur Durchführung des Verfahrens nach einem der Ansprüche 1 bis 7.

9. Fahrzeug mit einem Regel- bzw. Steuergerät nach Anspruch 8.

10. Fahrzeug nach Anspruch 9, **dadurch gekennzeichnet, dass** das Fahrzeug (1) als Hybridfahrzeug ausgeführt ist und als Antriebsmotoren (2, 3) einen Verbrennungsmotor und mindestens einen Elektromotor aufweist.

11. Fahrzeug nach Anspruch 10, **dadurch gekennzeichnet, dass** ein Elektromotor vorgesehen ist, der eine Fahrzeugachse (8, 9) mit einem Antriebsmoment beaufschlagt.

12. Fahrzeug nach Anspruch 10, **dadurch gekennzeichnet, dass** zwei Elektromotoren vorgesehen sind, die das linke und rechte Fahrzeugrad an einer gemeinsamen Fahrzeugachse (8, 9) mit einem Antriebsmoment beaufschlagen.
